# EUROPÄISCHE PATENTSCHRIFT

(11) **EP 2 840 123 B1**
(45) Veröffentlichungstag und Bekanntmachung des Hinweises auf die Patenterteilung: **18.04.2018**
(21) Anmeldenummer: 14002317.7
(22) Anmeldetag: 07.07.2014
(51) Int. Cl.: B29C 65/00, B29C 65/48, C08J 5/12, C09J 5/00

(54) **VERWENDUNG EINES QUELLSCHWEISSMITTELS**
USE OF A SOLVENT WELDING AGENT
UTILISATION D'UN AGENT DE SOUDAGE PAR SOLVANT

(30) Priorität: 23.08.2013 DE 102013013974; 17.09.2013 DE 102013015344; 26.09.2013 DE 102013015994; 11.10.2013 DE 102013016973
(43) Veröffentlichungstag der Anmeldung: 25.02.2015
(73) Patentinhaber: EWALD DÖRKEN AG, 58313 Herdecke (DE)
(72) Erfinder: Schröer, Jörn, 58313 Herdecke (DE); Harfmann, Carsten, 60323 Frankfurt (DE)
(74) Vertreter: Von Rohr Patentanwälte Partnerschaft mbB

(56) Entgegenhaltungen:
- DE-A1- 1 604 675
- DE-U1-202010 000 934
- US-A- 2 356 290
- US-A- 5 416 142
- US-A- 5 563 193
- US-A1- 2003 062 124
- US-A1- 2006 030 689
- "Lösemittel Mischbarkeitstabelle", , 1. Januar 2012 (2012-01-01), Seiten 1-1, XP055257486, Gefunden im Internet: URL:http://emr-chromatography.com/deu/lose mittel_mischbarkeitstabelle.html [gefunden am 2016-03-11]

## Beschreibung

Die Erfindung betrifft die Verwendung eines Quellschweißmittels gemäß dem Oberbegriff des Anspruchs 1.

Das Quellschweißen im Sinne der vorliegenden Erfindung ist eine Fügetechnik, die eingesetzt wird, um Polymeroberflächen miteinander zu verbinden. Das Quellschweißen ist dadurch charakterisiert, dass ein Lösungsmittel auf die zu verbindenden Oberflächen zum Anlösen der Oberflächen aufgetragen wird und die zu verbindenden Oberflächen daraufhin in Kontakt miteinander gebracht werden, woraufhin eine stoffschlüssige Verbindung entsteht. Dabei erfolgt bei der Entstehung der Verbindung eine Diffusion der durch das Lösungsmittel gelösten Moleküle der Polymere in die jeweils gegenüberliegende Oberfläche. Diese Fügetechnik wird auch als "Kaltschweißen" oder als "Lösungsmittelschweißen" bezeichnet.

Der Vorteil des Quellschweißens ist, dass es eine einfache und ökonomische Methode zur Herstellung einer Verbindung zwischen zwei Körpern mit Polymeroberflächen darstellt. Ein weiterer Vorteil des Quellschweißens ist es, dass eine quellverschweißte Verbindung verhältnismäßig unempfindlich gegenüber thermischen Schwankungen ist. Zum Beispiel sind quellverschweißte Verbindungen regelmäßig unempfindlicher gegenüber thermischen Schwankungen als Verklebungen.
Ein Anwendungsgebiet, auf dem Quellverschweißungen in vorteilhafter Weise zur Anwendung kommen, ist das Verbinden von Bahnen mit Polymeroberflächen im Baubereich. Dort werden beispielsweise Polyvinylchloridoberflächen, beispielsweise zur Abdichtung von Flachdächern, quellverschweißt. Im Fall von Steildächern kommen Bahnen mit Polymeroberflächen ebenfalls, insbesondere im Unterdachbereich zum Einsatz. Diese Polymerbahnen, die auch als Unterdachbahnen bezeichnet werden, sind im Sinne der Norm SIA 232-1/2011-8 zwingend untereinander zu verschweißen. Die zu verschweißenden Polymeroberflächen dieser Unterdachbahnen bestehen regelmäßig aus Thermoplastischem Polyurethan (TPU).
In der Praxis wird als Quellschweißmittel, das heißt als das Lösungsmittel, welches zum Verbinden der Oberflächen auf die zu verbindenden Oberflächen aufgetragen wird, derzeit ausschließlich Tetrahydrofuran (THF) eingesetzt. Ebenfalls kommen Mischungen aus THF und anderen organischen Stoffen, wie beispielsweise Cyclohexanon oder 2-Butanon zum Einsatz.

Diese, in ihrer Wirkung im wesentlichen auf THF basierenden, Quellschweißmittel zeichnen sich durch ein gutes Lösungsvermögen des THF gegenüber den in der Praxis verwendeten Polymeren aus, welches in einer hohen Festigkeit der Quellverschweißung resultiert. Unter einer hohen Festigkeit einer Quellschweißverbindung in diesem Sinne wird insbesondere eine hohe Festigkeit der Quellschweißverbindung angesehen, die sich 24 h, nachdem die zu verbindenden Polymeroberflächen miteinander in Kontakt gebracht worden sind, einstellt. Diese Festigkeit wird im Folgenden als Festigkeit (24 h) bezeichnet.

Die Festigkeit einer Quellschweißverbindung steigt nach dem Inkontaktbringen der Polymeroberflächen zunächst an. Dieser Anstieg der Festigkeit resultiert daraus, dass sich das Lösungsmittel durch Stofftransportvorgänge aus der Kontaktzone zwischen den Polymeroberflächen verflüchtigt. Dabei kann der Stofftransport bei der Verflüchtigung des Lösungsmittels sowohl durch die Polymeroberflächen selbst wie auch aus dem Spalt zwischen den zu verbindenden Oberflächen heraus direkt in die Umgebung der Quellverschweißung, das heißt in der Regel in die Gasphase, stattfinden.

In der Praxis ist es dabei von Bedeutung, dass nicht nur eine hohe Festigkeit der Quellschweißverbindung nach einer hinreichend langen Wartezeit erreicht werden kann, sondern es muss auch bereits nach einer kurzen Zeit, beispielsweise fünf Minuten, eine gewisse Festigkeit der Quellschweißverbindung erreicht werden. Dies muss zumindest ausreichen, um eine Weiterverarbeitung der zu verbindenden Oberflächen zu ermöglichen, bevor nach einer endlichen Wartezeit die endgültige Festigkeit der Quellschweißverbindung erreicht ist. THF ermöglicht eine Weiterverarbeitung regelmäßig nach einer vergleichsweise kurzen Einwirkzeit.

Nachteilig an der Verwendung von THF ist jedoch, dass es als gesundheitsgefährdend angesehen wird und im Verdacht steht, krebserregend zu sein. Weiterhin kann THF explosive Peroxide bilden.

Die US 2003/0062124 A1 betrifft eine flüssige Zusammensetzung zur Vorbereitung von Polymeroberflächen, die nachfolgend mit Polyurethan-Klebstoffen verklebt werden. Die Zusammensetzung umfasst ein polares aprotisches Lösemittel, einen Ether sowie einen Aktivator.

Aus der DE 20 2010 000 934 U1 geht eine Unterdeckbahn für geneigte Dächer hervor, deren Dicke derart bemessen ist, dass die Unterdeckbahn mit einer weiteren gleichartigen Unterdeckbahn durch thermisches Verschweißen und/oder Quellschweißen wasserdicht und wasserdampfdurchlässig zusammenfügbar ist.

Aufgabe der vorliegenden Erfindung ist es nun, die Vewendung eines Quellschweißmittels zur Verfügung zu stellen, das geringere Risiken, insbesondere für die Gesundheit und im Hinblick auf die Sicherheit bei der Verarbeitung, aufweist als bekannte Quellschweißmittel, dabei jedoch eine hinreichend schnelle Weiterverarbeitung und eine hinreichende Festigkeit der Quellschweißverbindung ermöglichen.

Die Aufgabe wird gelöst durch die Verwendung eines Quellschweißmittels mit den Merkmalen des Anspruchs 1. Die Merkmale der Unteransprüche betreffen vorteilhafte Ausführungsformen.

Erfindungsgemäß ist vorgesehen, dass das Quellschweißmittel ein stofftransportförderndes Mittel zur Förderung des Stofftransports des Lösungsmittels aus der Kontaktzone zwischen den Polymeroberflächen, insbesondere der überlappenden Bahnen, enthält.

Durch das stofftransportfördernde Mittel wird nicht nur, und insbesondere bevorzugt, das Lösungsmittel sondern auch das gesamte Quellschweißmittel als solches schneller aus der Kontaktzone zwischen den Polymeroberflächen entfernt. Dadurch steigt die Festigkeit der Quellschweißverbindung schneller an. Durch die Erfindung ist es möglich, Lösungsmittel einzusetzen, die in herkömmlichen Quellschweißmitteln wegen ihres schlechten eigenen Stofftransportvermögens keine Anwendung finden würden, obwohl sie an sich ein hinreichendes Lösungsvermögen gegenüber den zu verschweißenden Polymeroberflächen haben und, beispielsweise im Hinblick auf die Gesundheitsschädlichkeit, Vorzüge gegenüber dem etablierten Tetrahydrofuran aufweisen.

Vorteilhafterweise enthält das erfindungsgemäße Quellschweißmittel weniger als 1 Gew.-% Tetrahydrofuran (THF). Damit geht die Erfindung einen völlig neuen Weg und weicht von den bekannten THF-Quellschweißmitteln ab. Das erfindungsgemäße Quellschweißmittel weist mit diesem Gehalt an THF ein hinreichend geringes Gefährdungspotential auf. Dabei hat sich überraschenderweise gezeigt, dass es möglich ist, bei erfindungsgemäßen Quellschweißmitteln bereits mit diesem THF-Gehalt eine hinreichend hohe Festigkeit der Quellschweißverbindung und eine hinreichend kurze Einwirkzeit zu ermöglichen.

Besonders vorteilhafterweise enthält das Quellschweißmittel kein THF. Der völlige Verzicht auf THF hat die weitestgehende Minimierung der aus dem THF resultierenden Risiken zur Folge.

Überraschenderweise ist festgestellt worden, dass sich Dimethylsulfoxid (DMSO) als Lösungsmittel in einem erfindungsgemäßen Quellschweißmittel eignet. DMSO hat den Vorteil, zum einen ein hinreichend hohes Lösungsvermögen gegenüber den für Quellverschweißungen in Frage kommenden Polymeren aufzuweisen und zum anderen ein hinreichend geringes Risiko für die menschliche Gesundheit darzustellen. Alternativ oder in Kombination damit sind als Lösungsmittel auch Dimethylformamid (DMF) und/oder n-Methylpyrrolidon (NMP) geeignet. Dabei ist die Auswahl des Lösungsmittels weder auf organische Substanzen noch auf Reinstoffe beschränkt. Grundsätzlich kommen auch Stoffe wie beispielsweise Wasser oder Stoffgemische, beispielsweise eine Mischung der vorgenannten, als Lösungsmittel bevorzugten Reinstoffe, als Lösungsmittel in Frage. Es versteht sich von selbst, dass unter einer Mischung von Reinstoffen in diesem Zusammenhang insbesondere auch eine Mischung chemischer Verbindungen anzusehen ist.

Das stofftransportfördernde Mittel kann ebenfalls ein Reinstoff oder ein Stoffgemisch sein. Dabei versteht es sich von selbst, dass unter einem Stoffgemisch in diesem Zusammenhang insbesondere auch eine Mischung verschiedener chemischer Verbindung zu verstehen ist.

Erfindungswesentliches Charakteristikum des stofftransportfördernden Mittels ist seine Eignung zur Förderung der Verfestigung der Quellschweißverbindung. Dies beruht insbesondere auf der Eigenschaft, dass dieses Mittel in möglichst kurzer Zeit das Quellschweißmittel und besonders das Lösungsmittel aus der Kontaktzone zwischen den Polymeroberflächen heraustransportiert. Somit können bei der Erfindung Lösungsmittel eingesetzt werden, die ein für das Polymer ausgezeichnetes Lösungsverhalten haben, aber als solches für ein Quellschweißmittel wegen ihrer schlechten Verflüchtigkeit niemals verwendet worden wären.

Die Erfindung nutzt folglich den Synergieeffekt einer Mischung aus zwei Mitteln, die jeweils primär eine der Eigenschaften, die bei herkömmlichen Quellschweißmitteln in THF vereint sind, mit sich bringen. Das Lösungsmittel bewirkt, zumindest im wesentlichen, das Lösungsvermögen des erfindungsgemäßen Quellschweißmittels gegenüber dem Polymer. Das stofftransportfördernde Mittel hingegen bewirkt, zumindest im wesentlichen, einen hinreichend schnellen Abtransport des erfindungsgemäßen Quellschweißmittels aus der Kontaktzone und beschleunigt so die Verfestigung der entstehenden Quellschweißverbindung.

Wurde bei herkömmlichen Quellschweißmitteln versucht, ein Lösungsmittel zu verwenden, welche die beiden vorgenannten Eigenschaften der beiden Mittel in sich vereint, werden erfindungsgemäß nun zwei Mittel ausgewählt werden. Diese müssen für sich genommen nur eine der vorgenannten Eigenschaften aufweisen und dem erfindungsgemäßen Quellschweißmittel verleihen. Hierdurch kommen eine Vielzahl von Mitteln für das erfindungsgemäße Quellschweißmittel in Frage, die bei herkömmlichen Quellschweißmitteln ungeeignet gewesen wären. Die Möglichkeit, aus einem größeren Pool möglicher Inhaltsstoffe auszuwählen, ermöglicht es, das Quellschweißmittel im Hinblick auf weitere Eigenschaften zu optimieren. Zu diesen Eigenschaften gehört insbesondere eine möglichst geringe Gesundheitsgefährdung.

Der Stofftransport kann sowohl aufgrund der Diffusion des Quellschweißmittels durch das die Polymeroberfläche bildende Polymer, als auch durch Verflüchtigung, insbesondere Verdunstung, des Quellschweißmittels aus der Kontaktzone zwischen den Polymeroberflächen heraus an die Umgebung, also nach Art der Effusion aus einem Spalt zwischen den Polymeroberflächen, stattfinden. In der Praxis wird regelmäßig eine Kombination bzw. eine Überlagerung beider Stofftransportmechanismen zu beobachten sein.

Als stofftransportförderndes Mittel im Sinne der vorliegenden Erfindung wird insbesondere ein Mittel angesehen, das, insbesondere durch die Beschleunigung des Ablaufs der vorstehend beschriebenen Stofftransportphänomene, die Geschwindigkeit des Anstiegs der Festigkeit der Quellschweißverbindung nach dem Inkontaktbringen der Polymeroberflächen erhöht, bzw. den Anstieg der Festigkeit der Quellschweißverbindung nach dem Inkontaktbringen der Polymeroberflächen beschleunigt.

Die Festigkeit einer Quellschweißverbindung kann im Fall von Dachabdichtungsbahnen beispielsweise gemäß der Norm DIN EN 12317-2 "Abdichtungsbahnen - Bestimmung des Scherwiderstands der Fügenähte - Teil 2: Kunststoff- und Elastomerbahnen für Dachabdichtungen" mit der Scherkraft bzw. dem Scherwiderstand als Maß für die Festigkeit bestimmt werden. Gemäß dieser Norm beträgt der früheste Zeitpunkt, zu dem die Festigkeit einer Quellschweißverbindung bestimmt wird, 20 h nach dem Inkontaktbringen der zu verbindenden Oberflächen. Im Hinblick auf eine zügige Weiterverarbeitung ist jedoch insbesondere die Festigkeit nach einer kürzeren Zeit, insbesondere 5 Minuten, von Bedeutung. Diese wird im Folgenden als Festigkeit (5 min) bezeichnet.

Im Sinne der vorliegenden Erfindung wird daher ein stofftransportförderndes Mittel insbesondere dann als solches angesehen, wenn es die Festigkeit der Quellschweißverbindung, insbesondere 5 Minuten nach dem Inkontaktbringen der Polymeroberflächen, hinreichend steigert. Als hinreichende Steigerung wird dabei insbesondere eine Verdopplung, besonders bevorzugt eine Vervierfachung, der Festigkeit (5 min) gegenüber der mit dem reinen Lösungsmittel erreichbaren Festigkeit (5 min) bezeichnet. Insbesondere wird die Festigkeit (5 min) dabei nach der Norm DIN EN 12317-2 mit der Maßgabe bestimmt, dass die Messung der Scherkraft als Maß für die Festigkeit (5 min) nicht, wie in der Norm vorgesehen, frühestens 20 h nach dem Inkontaktbringen der Polymeroberflächen erfolgt, sondern 5 Minuten nach dem Inkontaktbringen der Polymeroberflächen.

Dabei gilt insbesondere auch ein stofftransportförderndes Mittel als ein solches im Sinne der vorliegenden Erfindung, wenn sich durch die Zugabe des stofftransportfördernden Mittels zum Lösungsmittel die erreichbare Festigkeit (5 min) gegenüber dem reinen Lösungsmittel auf einen Wert von >50 N, vorzugsweise >100 N, steigern lässt. Die Festigkeit (5 min) wird dabei insbesondere nach DIN EN 12317-2 mit der Maßgabe bestimmt, dass die Messung des Scherwiderstands bzw. der Scherkraft als Maß für die Festigkeit (5 min) 5 Minuten nach dem Inkontaktbringen der Polymeroberflächen erfolgt.

Die Konzentration des Lösungsmittels beträgt 25 Gew.-% bis 40 Gew.-% und die Konzentration des stofftransportfördernden Mittels 60 Gew.-% bis 75 Gew.-%. Dabei kann das erfindungsgemäße Quellschweißmittel bis zu 15 Gew.-% weitere Bestandteile enthalten.

Vorzugsweise enthält das Quellschweißmittel wenigstens ein gelöstes Polymer. Bei dem gelösten Polymer kann es sich um Polystyrol (PS), Polyisobuthylen (PIB), Polymethylmethacrylat (PMMA), Ethylenvinylacetat (EVA), Polyvinylchlorid (PVC) und/oder thermoplastisches Polyurethan (TPU) handeln.

Vorzugsweise ist das stofftransportfördernde Mittel ein leicht-, mittel- oder schwerflüchtiger Stoff oder ein leicht-, mittel- oder schwerflüchtiges Stoffgemisch. Dabei sind die Begriffe leichtflüchtig, mittelflüchtig oder schwerflüchtig durch die sogenannte Verdunstungszahl definiert. Bei dieser handelt es sich um eine dimensionslose relative Kennzahl, die die Verdunstung eines Stoffes in Relation zu einem Bezugstoff beschreibt. Dieser Bezugstoff ist Diethylether. Verdunstungszahlen von 10 bis 35 entsprechen dabei "mittelflüchtig", Verdunstungszahlen kleiner 10 "leichtflüchtig" und Verdunstungszahlen von 35 bis 50 "schwerflüchtig". Das stofftransportfördernde Mittel weist dabei vorzugsweise eine Verdunstungszahl von höchstens 50, besonders vorzugsweise eine Verdunstungszahl von höchstens 35 auf.

Das stofftransportfördernde Mittel ist ausgewählt aus
- der Gruppe der Alkohole, wie zum Beispiel Methanol, Ethanol, Isopropanol und n-Propanol, und/oder
- der Gruppe der Ketone wie zum Beispiel Aceton, Butanon, Methylisobutylketon oder Cyclohexanon, und/oder
- der Gruppe der Ether wie zum Beispiel 2-Methyltetrahydrofuran, 1,4-Dioxan oder Tetrahydropyran, und/oder
- der Gruppe der ethergruppenhaltigen Alkohole wie zum Beispiel Methylglykol, Ethoxypropanol oder Methoxypropanol, und/oder
- der Gruppe der Ester wie zum Beispiel Essigsäuremethylester, Essigsäureethylester, Essigsäurepropylester, Essigsäurebutylester und Essigsäuremethoxypropylester, und/oder
- der Gruppe der Aromaten wie zum Beispiel Benzol, Xylol, aromatenhaltige Benzine, und/oder
- der Gruppe der Aliphaten wie zum Beispiel Cyclohexan, Petrolether oder Benzin.

Vorzugsweise ist das stofftransportfördernde Mittel selbst nicht als Quellschweißmittel geeignet, weil es kein ausreichendes Lösungsvermögen gegenüber Polymeren, insbesondere gegenüber themoplastischem Polyurethan (TPU), Polystyrol (PS), Polyisobuthylen (PIB), Polymethylmethacrylat (PMMA), Ethylenvinylacetat (EVA) und/oder Polyvinylchlorid (PVC) aufweist und somit nicht zu einer hinreichenden Festigkeit (24 h) der Quellschweißverbindung führt. Als hinreichend wird eine Festigkeit von mehr als 250 N Scherwiderstand bei einer Bestimmung gemäß DIN EN 12317-2 angesehen. Dabei tritt ein Materialbruch vorzugsweise außerhalb des unmittelbar von der Quellschweißverbindung betroffenen Materialbereichs auf.

Dabei weist vorzugsweise das Lösungsmittel gegenüber dem ersten Polymer und/oder gegenüber dem zweiten Polymer ein höheres Lösungsvermögen auf als das stofftransportfördernde Mittel.

Dabei ist das erste Polymer und das zweite Polymer thermoplastisches Polyurethan (TPU), Dabei handelt es sich bei der ersten Bahn für den Baubereich und/oder bei der zweiten Bahn für den Baubereich vorzugsweise um eine Flachdachbahn und/oder eine Unterdachbahn. Diese Bahnen können diffusionsoffen oder -dicht, ober aber als Dampfbremse ausgebildet sein. Dabei entspricht die Kontaktzone einem überlappenden Bereich zwischen zwei Bahnen und/oder ist Teil eines überlappenden Bereichs zwischen zwei Bahnen.
Dabei können die vorgenannten Merkmale der Erfindung in beliebigen Kombinationen miteinander in vorteilhafter Weise verwirklicht sein. Weiterhin sind, soweit die Grenzen von Wertebereichen angegeben sind, auch alle einzelnen in dem jeweiligen Wertebereich liegenden Einzelwerte und Zwischenintervalle möglich und dementsprechend offenbart, ohne dass es einer ausdrücklichen Nennung jedes einzelnen Wertes oder Zwischenintervalls bedarf.

Die vorliegende Erfindung wird durch die im Folgenden beschriebenen vorteilhaften Ausführungsbeispiele näher erläutert, wobei die vorliegende Erfindung jedoch keinesfalls auf die Ausführungsbeispiele begrenzt ist. Dabei zeigt
- Fig. 1: eine schematische Ansicht einer typischen Verlegesituation quellverschweißter Bahnen im Baubereich,
- Fig. 2: eine schematische Querschnittsansicht einer Quellschweißverbindung unmittelbar nach dem Inkontaktbringen der Oberflächen,
- Fig. 3: eine schematische Querschnittsdarstellung einer Quellschweißverbindung bei abgeschlossener Verfestigung und
- Fig. 4: eine schematische Querschnittsdarstellung einer Unterdachbahn.

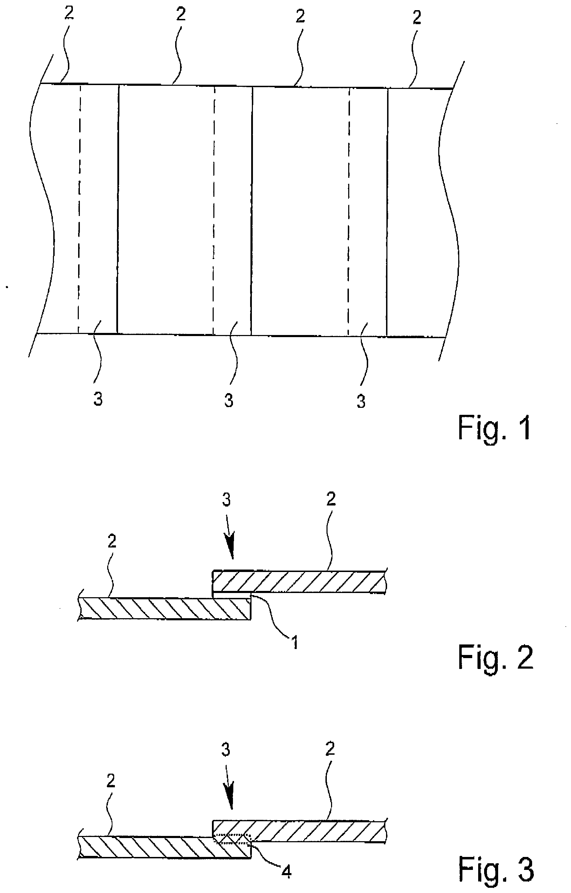

Die Fig. 1 zeigt als beispielhaften Anwendungsfall für die Verwendung eines erfindungsgemäßen Quellschweißmittels 1 die Quellschweißverbindung einer Mehrzahl Bahnen 2 im Baubereich. Die untereinander verbundenen Bahnen 2 können beispielsweise eine wasserdichte und diffusionsoffene, diffusionsgeschlossene oder als Dampfbremse ausgebildete Gebäude- oder Dachaußenhaut bilden. Die Bahnen 2 überlappen sich in Bereichen 3. Im überlappenden Bereich 3 wird das Quellschweißmittel 1 als Film zwischen den Bahnen 2 eingebracht, wie es schematisch in Fig. 2 dargestellt ist. Dadurch entsteht zwischen den zu verschweißenden Polymeroberflächen der Bahnen 2 eine Kontaktzone 4. In der Kontaktzone 4 verbinden sich die Bahnen 2, in dem die durch das Quellschweißmittel 1 angelösten Polymere der Bahnen 2 in die jeweils gegenüberliegende Bahn 2 diffundieren. Gleichzeitig wird das Quellschweißmittel 1 aus der Kontaktzone 4 zwischen den Bahnen 2 durch Stofftransport abtransportiert, wobei sich die Quellschweißverbindung verfestigt. Die Situation nach der vollständigen Verfestigung der Quellschweißverbindung ist in Fig. 3 schematisch dargestellt. Im folgenden werden einige Beispiele erfindungsgemäßer Quellschweißmittel und damit hergestellter Quellschweißverbindung angegeben.

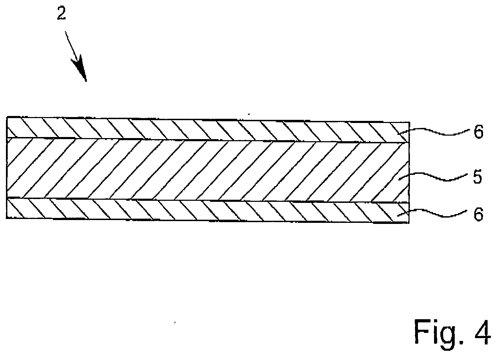

Dabei werden für die im Folgenden angegebenen Beispiele für die Verwendung erfindungsgemäßer Quellschweißmittel 1 zur Herstellung von Quellschweißverbindungen beispielhaft Probekörper aus einer symmetrischen Unterdachbahn 2 eingesetzt. Ein Querschnitt einer solchen symmetrischen Unterdachbahn ist in der Fig. 4 dargestellt. Die Unterdachbahn 2 besteht aus einer mittigen Vliesträgerschicht 5 und ober- und unterseitig darauf aufgebrachten Polymerschichten 6. Die Vliesträgerschicht 5 ist im gewählten Beispiel vorzugsweise ein Polyestervlies und weist eine Reißkraft von mindestens 250 N/5 cm gemäß EN 12311-1:1999 auf. Die Polymerschichten 6 sind extrudiert in einer Grammatur von 100 g/m² auf die Vliesträgerschicht 5 aufgebracht.

Alternativ wäre auch die Verwendung von Probekörpern ohne Trägerschicht denkbar. Diese können beispielsweise aus einem Polymer bestehen und in ihrer Dicke so ausgelegt sein, dass sie eine Reißkraft von mindestens 250 N/5 cm gemäß EN 12311-1:1999 aufweisen.

Die Verwendung derartiger Probekörper ist im Folgenden lediglich beispielhaft gewählt, in der Praxis wird die Verwendung erfindungsgemäßer Quellschweißmittel 1 an realen Bauteilen, insbesondere realen Bahnen 2 für den Baubereich erfolgen. Lediglich um die Wirkung der erfindungsgemäßen Quellschweißmittel 1 in vergleichbarer Weise darzustellen, wurden genormte Probekörper aus geeigneten Unterdachbahnen gewählt.

Für die im Folgenden angeführten Beispiele gilt, dass die Reißkraft des Polyestervlieses 5 des verwendeten Probekörpers 400 N/5 cm mit einer Toleranz von ± 20%, also 320 N/5 cm bis 480 N/5 cm, beträgt. Die Polymerschichten 6 bestehen aus TPU.

Die Probekörper werden auf einer Länge von 1 m mit einer Überlappung von 5 cm durch eine Quellverschweißung zwischen den überlappenden Polymerschichten 6 in der Kontaktzone 4 im überlappenden Bereich 3 der Bahnen 2 verbunden. Dabei wird das Quellschweißmittel 1 mit einem Pinsel in einer Dosierung von 5 ml pro Quellschweißverbindung in den überlappenden Bereich auf- bzw. eingebracht. Dies kann auf die Oberfläche einer oder die Oberflächen beider Bahnen im Bereich der Kontaktzone 4 erfolgen. Daraufhin wird der überlappende Bereich mit einer Andruckrolle zusammengedrückt.

Die Verarbeitung und anschließende Lagerung erfolgt dabei bei einer Temperatur von 23°C und einer relativen Luftfeuchte zwischen 30 % und 70 %.

Die Festigkeit der Quellschweißverbindung wird daraufhin nach DIN EN 12317-2 bestimmt. Dabei gilt die derart ermittelte Scherkraft 24 h nach dem Inkontaktbringen der Polymerschichten 6 als Maß für die Festigkeit (24 h) der Quellschweißverbindung.

Auf die gleiche Weise, jedoch insofern abweichend von der vorgenannten Norm, dass die Bestimmung der Scherkraft bereits nach 5 Minuten nach dem Inkontaktbringen der Polymerschichten 6 erfolgt, wird die Scherkraft als Maß für die Festigkeit (5 min) bestimmt.

Gemäß einem Vergleichsbeispiel wird als Quellschweißmittel reines DMSO verwendet.

Nach einer Einwirkzeit von 5 min beträgt die Scherkraft als Maß für die Festigkeit (5 min) der Quellschweißverbindung lediglich 22 N. Die Scherkraft nach 24 h als Maß für die Festigkeit (24 h) der Quellschweißverbindung beträgt 300 N. Der Bruch erfolgt innerhalb des Bereichs der Quellverschweißung. Zwischen den Polymeroberflächen befindet sich nach 24 h noch flüssiges bzw. zähflüssiges DMSO.

Gemäß einem nicht erfindungsgemäßen ersten Ausführungsbeispiel wird als Quellschweißmittel eine Mischung aus 50 Gew.-% DMSO und 50 Gew.-% Aceton verwendet.
Nach einer Einwirkzeit von 5 min beträgt die Scherkraft als Maß für die Festigkeit (5 min) der Quellschweißverbindung 94 N. Die Scherkraft nach 24 h als Maß für die Festigkeit (24 h) der Quellschweißverbindung beträgt 345 N. Der Bruch erfolgt außerhalb des Bereichs der Quellverschweißung.
Gemäß einem zweiten Ausführungsbeispiel der vorliegenden Erfindung wird als Quellschweißmittel eine Mischung aus 27 Gew.-% DMSO und 73 Gew.-% Aceton verwendet.
Nach einer Einwirkzeit von 5 min beträgt die Scherkraft als Maß für die Festigkeit (5 min) der Quellschweißverbindung 123 N. Die Scherkraft nach 24 h als Maß für die Festigkeit (24 h) der Quellschweißverbindung beträgt 359 N. Der Bruch erfolgt außerhalb des Bereichs der Quellverschweißung.

Gemäß einem nicht erfindungsgemäßen dritten Ausführungsbeispiel wird als Quellschweißmittel eine Mischung aus 20 Gew.-% DMSO und 80 Gew.-% Aceton verwendet.

Nach einer Einwirkzeit von 5 min beträgt die Scherkraft als Maß für die Festigkeit (5 min) der Quellschweißverbindung 242 N. Die Scherkraft nach 24 h als Maß für die Festigkeit (24 h) der Quellschweißverbindung beträgt 365 N. Der Bruch erfolgt außerhalb des Bereichs der Quellverschweißung.

Gemäß einem vierten Ausführungsbeispiel der vorliegenden Erfindung wird als Quellschweißmittel eine Mischung aus 27 Gew.-% DMSO und 73 Gew.-. Aceton verwendet. Bei diesem Ausführungsbeispiel erfolgt die Verarbeitung , die Lagerung und die Messung der Scherkräfte bei 0°C.

Nach einer Einwirkzeit von 5 min beträgt die Scherkraft als Maß für die Festigkeit (5 min) der Quellschweißverbindung 356 N. Die Scherkraft nach 24 h Lagerung als Maß für die Festigkeit (24 h) der Quellschweißverbindung beträgt 411 N. Der Bruch erfolgt außerhalb des Bereichs der Quellverschweißung.

Gemäß einem nicht erfindungsgemäßen fünften Ausführungsbeispiel wird als Quellschweißmittel eine Mischung aus 17 Gew.-% DMSO und 83 Gew.-% Tetrahydropyran verwendet.
Nach einer Einwirkzeit von 5 min beträgt die Scherkraft als Maß für die Festigkeit (5 min) der Quellschweißverbindung 210 N. Die Scherkraft nach 24 h als Maß für die Festigkeit (24 h) der Quellschweißverbindung beträgt 423 N. Der Bruch erfolgt außerhalb des Bereichs der Quellverschweißung.
Gemäß einem sechsten Ausführungsbeispiel der vorliegenden Erfindung wird als Quellschweißmittel eine Mischung aus 27 Gew.-% DMSO und 73 Gew.-% Essigsäurebutylester verwendet.
Nach einer Einwirkzeit von 5 min beträgt wird die Scherkraft als Maß für die Festigkeit (5 min) der Quellschweißverbindung 190 N. Die Scherkraft nach 24 h als Maß für die Festigkeit (24 h) der Quellschweißverbindung beträgt 378 N. Der Bruch erfolgt außerhalb des Bereichs der Quellverschweißung.
Gemäß einem siebten Ausführungsbeispiel der vorliegenden Erfindung wird als Quellschweißmittel eine Mischung aus 27 Gew.-% DMSO und 73 Gew.-% Essigsäure-1-methoxy-2-propylester (PMA) verwendet.

Nach einer Einwirkzeit von 5 min beträgt die Scherkraft als Maß für die Festigkeit (5 min) der Quellschweißverbindung 120 N. Die Scherkraft nach 24 h als Maß für die Festigkeit (24 h) der Quellschweißverbindung beträgt 390 N. Der Bruch erfolgt außerhalb des Bereichs der Quellverschweißung.

Gemäß einem achten Ausführungsbeispiel der vorliegenden Erfindung wird als Quellschweißmittel eine Mischung aus 27 Gew.-% DMSO, 30 Gew.-% Aceton und 43 Gew.-% Essigsäure-1-methoxy-2-propylester (PMA) verwendet.
Nach einer Einwirkzeit von 5 min beträgt die Schwerkraft als Maß für die Festigkeit (5 min) der Quellschweißverbindung 114 N. Die Scherkraft nach 24 h als Maß für die Festigkeit (24 h) der Quellschweißverbindung beträgt 355 N. Der Bruch erfolgte außerhalb des Bereiches der Quellverschweißung.

### Bezugszeichenliste:

- 1: Quellschweißmittel
- 2: Bahn
- 3: überlappender Bereich
- 4: Kontaktzone
- 5: Vliesträgerschicht
- 6: Polymerschicht

## Patentansprüche

1. Verwendung eines Quellschweißmittels (1) zum Verschweißen einer ersten Polymeroberfläche einer ersten Bahn (2) für den Baubereich aus einem ersten Polymer mit einer zweiten Polymeroberfläche einer zweiten Bahn (2) aus dem Baubereich aus einem zweiten Polymer, wobei das erste Polymer und das zweite Polymer thermoplastisches Polyurethan (TPU) ist, wobei das Quellschweißmittel (1) ein Lösungsmittel zum Lösen eines Polymers enthält,
**dadurch gekennzeichnet,**
**dass** das Quellschweißmittel (1) ein stofftransportförderndes Mittel zur Förderung des Stofftransports des Lösungsmittels aus einer Kontaktzone (4) zwischen den Polymeroberflächen enthält, wobei das Lösungsmittel Dimethylsulfoxid (DMSO), n-Methylpyrrolidon (NMP) oder Dimethylformamid (DMF) ist und wobei das stofftransportfördernde Mittel ausgewählt ist aus der Gruppe der Alkohole, der Ketone, der Ether, der Ester, der Aromaten und/oder der Aliphaten, wobei der Massenanteil des Lösungsmittels am Quellschweißmittel (1) höchstens 40 Gew.-% und wenigstens 25 Gew.-% beträgt und wobei der Masseanteil des stofftransportfördernden Mittels am Quellschweißmittel (1) höchstens 75 Gew.-% und wenigstens 60 Gew.-% beträgt.

2. Verwendung eines Quellschweißmittels nach Anspruch 1, **dadurch gekennzeichnet,**
**dass** das Quellschweißmittel (1) weniger als 1 Gew.-% Tetrahydrofuran, vorzugsweise kein Tetrahydrofuran, enthält.

3. Verwendung eines Quellschweißmittels nach Anspruch 1 oder 2, **dadurch gekennzeichnet, dass** das stofftransportfördernde Mittel geeignet ist, den Anstieg der Festigkeit der Quellschweißverbindung nach dem Inkontaktbringen der Polymeroberfläche in Relation zur Verwendung des reinen Lösungsmittels als Quellschweißmittel (1) zu beschleunigen, insbesondere die 5 min nach dem Inkontaktbringen der Polymeroberflächen erreichte Festigkeit der Quellschweißverbindung wenigstens zu verdoppeln, vorzugsweise zu vervierfachen.

4. Verwendung eines Quellschweißmittels nach einem der vorhergehenden Ansprüche,
**dadurch gekennzeichnet, dass** das Lösungsmittel ein höheres Lösungsvermögen gegenüber themoplastischem Polyurethan (TPU) aufweist als das stofftransportfördernde Mittel.

5. Verwendung eines Quellschweißmittels nach einem der vorhergehenden Ansprüche,
**dadurch gekennzeichnet, dass** das Lösungsmittel geeignet ist, eine Lösung mit einem Anteil von wenigstens 0,1 Gew.-%, bevorzugt wenigstens 1 Gew.-% bis 25 Gew.-%, themoplastischem Polyurethan (TPU) herzustellen.

6. Verwendung eines Quellschweißmittels nach einem der vorangehenden Ansprüche,
**dadurch gekennzeichnet, dass** die erste Polymeroberläche und/oder die zweite Polymeroberfläche eine Oberfläche einer einer Flachdachbahn und/oder einer Unterdachbahn ist.

## Claims

1. Use of a solvent welding agent (1) for welding a first polymer surface of a first membrane (2), for the building sector, made of a first polymer, with a second polymer surface of a second membrane (2), from the building sector, made of a second polymer, wherein the first polymer and the second polymer are thermoplastic polyurethane (TPU), wherein the solvent welding agent (1) contains a solvent for dissolving a polymer,
**characterised in that**
the solvent welding agent (1) comprises a material transport-promoting agent for promoting the material transport of the solvent from a contact zone (4) between the polymer surfaces, wherein the solvent is dimethyl sulfoxide (DMSO), n-methylpyrrolidone (NMP) or dimethylformamide (DMF), and wherein the material transport-promoting agent is selected from the group of alcohols, ketones, ethers, esters, aromatics and/or aliphatics, wherein the mass fraction of the solvent in the solvent welding agent (1) is at most 40 wt.% and at least 25 wt.%., and wherein the mass fraction of the material transport-promoting agent in the solvent welding agent (1) is at most 75 wt.% and at least 60 wt.%.

2. Use of a solvent welding agent according to claim 1, **characterised in that** the solvent welding agent (1) contains less than 1 wt.% of tetrahydrofuran, preferably no tetrahydrofuran.

3. Use of a solvent welding agent according to claim 1 or 2, **characterised in that** the material transport-promoting agent is suitable for accelerating the increase in strength of the solvent-welded joint after bringing into contact with the polymer surface in relation to the use of the pure solvent as a solvent welding agent (1), in particular for at least doubling, preferably quadrupling, the strength of the solvent-welded joint 5 minutes after bringing the polymer surfaces into contact.

4. Use of a solvent welding agent according to one of the preceding claims,
**characterised in that** the solvent has a higher dissolving capacity compared to thermoplastic polyurethane (TPU) than the material transport-promoting agent.

5. Use of a solvent welding agent according to one of the preceding claims,
**characterised in that** the solvent is suitable for making a solution having a proportion of at least 0.1 wt.%, preferably at least 1 wt.% to 25 wt.%, of thermoplastic polyurethane (TPU).

6. Use of a solvent welding agent according to one of the preceding claims,
**characterised in that** the first polymer surface and/or the second polymer surface is a surface of a flat roof membrane and/or of a subroof membrane.

## Revendications

1. Utilisation d'un agent de soudage par solvant (1) pour souder une première surface polymère d'une première bande (2) pour le bâtiment constituée d'un premier polymère avec une seconde surface polymère d'une seconde bande (2) pour le bâtiment constituée d'un second polymère, le premier polymère et le second polymère étant du polyuréthane thermoplastique (TPU) et l'agent de soudage par solvant (1) contenant un solvant pour la dissolution d'un polymère,
**caractérisée en ce que**
l'agent de soudage par solvant (1) contient un agent favorisant le transfert de masse dans le but de favoriser le transfert de masse du solvant depuis une zone de contact (4) entre les surfaces polymères, le solvant étant du diméthylsulfoxyde (DMSO), de la n-méthylpyrrolidone (NMP) ou du diméthylformamide (DMF) et l'agent favorisant le transfert de masse étant choisi dans le groupe constitué des alcools, des cétones, des éthers, des esters, des composés aromatiques et/ou aliphatiques, la fraction massique de solvant par rapport à l'agent de soudage par solvant (1) représentant au maximum 40 % en poids et au moins 25 % en poids et la fraction massique d'agent favorisant le transfert de masse par rapport à l'agent de soudage par solvant (1) représentant au maximum 75 % en poids et au moins 60 % en poids.

2. Utilisation d'un agent de soudage par solvant selon la revendication 1, **caractérisée en ce que** l'agent de soudage par solvant (1) contient moins de 1 % en poids de tétrahydrofurane, de préférence pas du tout de tétrahydrofurane.

3. Utilisation d'un agent de soudage par solvant selon la revendication 1 ou 2, **caractérisée en ce que** l'agent favorisant le transfert de masse est adapté pour accélérer l'augmentation de la solidité de la liaison par soudage par solvant après la mise en contact de la surface polymère par rapport à l'utilisation du solvant pur en tant qu'agent de soudage par solvant (1), en particulier pour au moins doubler, de préférence pour quadrupler la solidité de la liaison par soudage par solvant obtenue 5 minutes après la mise en contact des surfaces polymères.

4. Utilisation d'un agent de soudage par solvant selon l'une quelconque des revendications précédentes, **caractérisée en ce que** le solvant présente un pouvoir solubilisant plus élevé vis-à-vis du polyuréthane thermoplastique (TPU) que celui de l'agent favorisant le transfert de masse.

5. Utilisation d'un agent de soudage par solvant selon l'une quelconque des revendications précédentes, **caractérisée en ce que** le solvant est adapté pour préparer une solution ayant une proportion d'au moins 0,1 % en poids, de préférence d'au moins 1 % en poids à 25% en poids de polyuréthane thermoplastique (TPU).

6. Utilisation d'un agent de soudage par solvant selon l'une quelconque des revendications précédentes, **caractérisée en ce que** la première surface polymère et/ou la seconde surface polymère est une surface du lé de toiture plate et/ou d'un écran de sous-toiture.
